# EUROPÄISCHE PATENTSCHRIFT

(11) **EP 2 651 619 B1**
(45) Veröffentlichungstag und Bekanntmachung des Hinweises auf die Patenterteilung: **21.01.2015**
(21) Anmeldenummer: 11793726.8
(22) Anmeldetag: 01.12.2011
(51) Int. Cl.: B29C 47/68, B29C 47/08, B01D 33/46

(54) **VORRICHTUNG ZUM KONTINUIERLICHEN FILTERN VON MATERIALGEMISCHEN**
APPARATUS FOR CONTINUOUS FILTERING OF MIXED MATERIALS
PROCEDE ET APPAREIL POUR LA FILTRATION CONTINUE D'UNE MÉLANGE DE MATIÈRES

(30) Priorität: 18.12.2010 DE 102010055167
(43) Veröffentlichungstag der Anmeldung: 23.10.2013
(73) Patentinhaber: Ettlinger Kunststoffmaschinen GmbH, 86343 Königsbrunn (DE)
(72) Erfinder: ETTLINGER, Roderich, 86179 Augsburg (DE)
(74) Vertreter: Ernicke, Klaus Stefan
(86) Internationale Anmeldenummer: PCT/EP2011/071464
(87) Internationale Veröffentlichungsnummer: WO 2012/079993

(56) Entgegenhaltungen:
- DE-U1- 20 210 115
- US-A- 5 618 423
- US-A1- 2007 102 342

## Beschreibung

Die Erfindung betrifft eine Vorrichtung zum kontinuierlichen Filtern von Materialgemischen, insbesondere zur Abtrennung von Verunreinigungen aus Kunststoffschmelzen, nach dem Oberbegriff des Anspruchs 1.

Gebrauchte Kunststoffe oder Kunststoffabfälle weisen üblicherweise hohe Anteile an Fremdstoffen, wie z.B. Metallteile, Papierreste, Glas, Sekundärkunststoffe und dgl. auf. Diese Fremdstoffe oder Verunreinigungen müssen vor der Wiederverwertung der Kunststoffe in der Regel entfernt werden. Dies erfolgt vielfach dadurch, dass die gebrauchten Kunststoffe durch Erwärmung zunächst plastifiziert werden und die Kunststoffschmelze anschliessend filtriert wird. Hierfür werden sogenannte Schmelzefilter eingesetzt, durch welche die metallischen oder nichtmetallischen Fremdstoffe oder höher schmelzende Kunststoffe abgetrennt werden. Um eine kontinuierliche und störungsfreie Filtrierung zu ermöglichen, müssen die Schmelzefilter jedoch ständig gereinigt werden.

Aus der DE 202 10 115 Ul ist eine gattungsgemäße Vorrichtung mit einem in einem Filterraum eines Gehäuses drehbar angeordneten Filter, einem Abstreifer zum Abheben der vom Filter zurückgehaltenen Verunreinigungen und einer Austragseinrichtung zum Abtransport der durch den Abstreifer vom Filter abgehobenen Verunreinigungen aus dem Gehäuse bekannt. Die Austragseinrichtung besteht bei dieser bekannten Vorrichtung aus einer innerhalb des Gehäuses in unmittelbarer Nähe des Abstreifers angeordneten Förderschnecke, die parallel zur Drehachse des rohrförmigen Filters verläuft. Die Förderschnecke ist derart angeordnet, dass die durch den Abstreifer von der Außenseite des Filters abgehobenen Rückstände bzw. Verunreinigungen unmittelbar an die Förderschnecke übergeben und von dieser aus dem Gehäuse heraustransportiert werden. Ein Nachteil dieser Fördereinrichtung besteht darin, dass die Verunreinigungen über die gesamte Länge der Förderschnecke und damit über einen relativ langen Förderweg transportiert werden müssen. Außerdem ist bei einer derartigen Fördereinrichtung eine direkte Verbindung vom Filterraum im Gehäuse über die Förderschecke vorhanden, so dass es zu einem Überströmen des gefilterten Materials in die für den Abtransport der Verunreinigungen vorgesehene Förderschnecke kommen kann. Die US 2007/102342 A1 offenbart ebenfalls eine Vorrichtung zum kontinuierlichen Filtern von Materialgemischen mit einem in einem Filterraum eines Gehäuses drehbar angeordneten Filter, mindestens einem Abstreifer zum Abheben der vom Filter zurück gehaltenen Verunreinigungen und einer Austragseinrichtung zum Abtransport der durch den Abstreifer vom Filter abgehobenen Verunreinigungen aus dem Gehäuse mittels einer Schraube.

Die US 5,518,423 A zeigt eine andere Filtereinrichtung, wobei für den Austrag der Verunreinigungen ein axial verschieblicher Kolben mit einer sich verjüngenden Durchgangsöffnung vorgesehen ist.

Aufgabe der Erfindung ist es, eine einfach aufgebaute Vorrichtung der eingangs genannten Art zu schaffen, die einen schnellen und sicheren Abtransport der vom Filter zurückgehaltenen Verunreinigungen oder Rückstände ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind in den Unteransprüchen angegeben.

Bei der erfindungsgemäßen Vorrichtung enthält die Austragseinrichtung eine im Gehäuse drehbar angeordnete Austragswelle, die mindestens eine durchgängige Öffnung mit mindestens einem in dieser verschiebbar geführten Kolben aufweist. Über den quer zur Drehachse oder auch in Richtung der Drehachse der Austragswelle verschiebbaren Kolben kann das durch dem Abstreifer vom Filter abgehobene Material ohne lange Transportwege relativ schnell nach außen abgeführt werden, wobei die Austragswelle mit dem darin angeordneten Kolben den unter Druck stehenden Filterraum nach außen abschließt. Da keine durchgehend offene Verbindung zwischen dem Filterraum und einer Austrittsöffnung für den Austrag der durch das Filter zurückgehaltenen Verunreinigungen vorhanden ist, kann ein Überströmen der zu filternden Materialgemisches in den für den Abtransport der Filterrückstände vorgesehen Bereich vermieden werden. Die erfindungsgemäße Vorrichtung ist einfach und kostengünstig aufgebaut und ist besonders für das Filtern von Materialgemischen mit geringerem Verschmutzungsgrad konzipiert.

Die Öffnung kann z.B. als durchgehender Schlitz ausgebildet sein, in dem ein einzelner schieberförmiger Kolben angeordnet ist. In dem Schlitz können aber auch mehrere schieberförmige Kolben angeordnet sein. Dadurch kann ein bei Einzelschiebern aufgrund eines ungünstigen Breiten- und Längenverhältnis auftretendes Verkanten um die Längsachse verhindert werden. In der Austragswelle können auch mehrere voneinander getrennte und in Achsrichtung der Austragswelle voneinander beabstandete schlitzförmige oder kreisrunde Öffnungen mit jeweils einem darin angeordneten schieberförmigen Kolben bzw. runden Kolben vorgesehen sein, wobei die Öffnungen gleich ausgerichtet oder in Umfangsrichtung winkelversetzt sein können.

Die Austragswelle ist zweckmäßigerweise in einer zum Filterraum offenen Längsbohrung des Gehäuses derart angeordnet, dass ein Teil der Austragswelle durch eine zum Filterraum offene Ausnehmung des Gehäuses ragt. Auf der zur Ausnehmung gegenüberliegenden Seite des Gehäuses ist eine Austrittsöffnung für den Austrag der durch die Austragseinrichtung abtransportierten Verunreinigungen vorgesehen.

In einer bevorzugten Ausführung weist der schieberförmige Kolben in Verschieberichtung gesehen eine geringere Breite als der Durchmesser der Austragswelle auf. Dadurch kann der schieberförmige Kolben bei einer Drehung der Austragswelle innerhalb des Schlitzes radial verschoben werden und dadurch Aufnahmekammern für die Verunreinigungen bilden. Die Drehzahl der Trägerwelle mit dem darauf angeordneten Filter und die Drehzahl der Austragswelle sind in zweckmäßiger Weise getrennt steuerbar, wodurch eine getrennte Regelung von Reinigungs- und Fremdstoffaustragsgeschwindigkeit ermöglicht wird. Durch eine derartige Regelung kann eine sehr hohe Fremdstoffkonzentration und somit eine hohe Ausbeute des Primärmaterials erzielt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Filtervorrichtung mit einer Reinigungseinrichtung in einem Querschnitt;
- **Figur 2**: einen vergrößerte Darstellung der Reinigungseinrichtung von Figur 1 und
- **Figur 3**: eine Schnittansicht der Filtervorrichtung entlang der Linie A-A von Figur 1;
- **Figur 4**: verschiedene Ausführungsbeispiele einer Austragswelle;
- **Figur 5**: eine vergrößerte Darstellung von Figur 2 und
- **Figur 6**: eine Austragswelle mit weiteren Ausführungsbeispielen eines Kolbens.

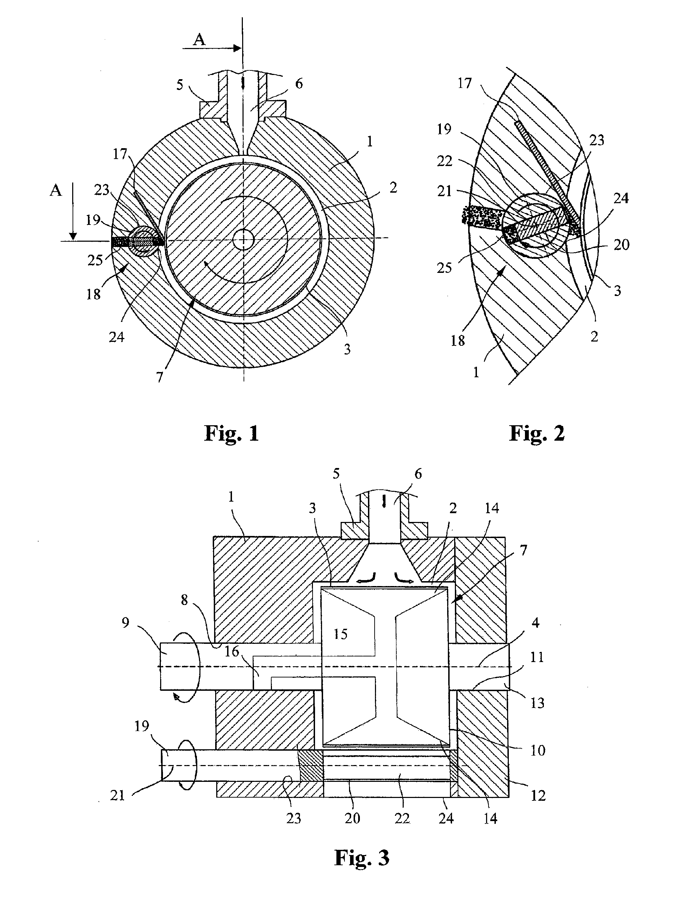

Die in den Figuren 1 bis 3 in unterschiedlichen Ansichten schematisch dargestellte Vorrichtung zum Filtern verunreinigter Kunststoffschmelzen enthält ein Gehäuse 1 mit einem Filterraum 2, in dem ein hohlzylindrisches Filter 3 um eine Drehachse 4 drehbar angeordnet ist. Das Gehäuse 1 enthält einen Materialeingang 5 mit einer Zuführöffnung 6, über die das zu filternde Material in den Filterraum 2 geleitet wird. Das z.B. aus einem Rohr mit einer Vielzahl von Radialbohrungen bestehende Filter 3 sitzt auf einer mittels eines Motors rotatorisch angetriebenen Trägerwelle 7, die gemäß Figur 3 einen in einer Bohrung 8 des Gehäuses 1 drehbar gelagerten schlankeren Antriebszapfen 9, einen im Filterraum 2 des Gehäuses 1 angeordneten verbreiterten Aufnahmeteil 10 für das Filter 3 und einen in einer entsprechenden Bohrung 11 eines am Gehäuse 1 befestigten Lagerdeckels 12 drehbar gelagerten Lagerzapfen 13 enthält. Über den mit einem nicht dargestellten Drehantrieb gekoppelten Antriebszapfen 9 ist das auf dem Aufnahmeteil 10 sitzende Filter 3 innerhalb der Filterraums 2 des Gehäuses 1 drehbar.

Das rohrförmige Filter 3 kann z.B. aus einem mit den Durchgangsöffnungen versehenen Stahlblech gefertigt sein, das zu einem Rohr gebogen und anschließend verschweist wird. Es wird zweckmäßigerweise aus einem verschleißfesten und korrrosionbeständigen Stahl hergestellt und gehärtet. Die Durchgangsöffnungen weisen in vorteilhafter Weise einen sich in Strömungsrichtung erweiternden Querschnitt auf und können z.B. durch Laserbearbeitung erzeugte konische Bohrungen sein. Das Filter 3 kann auch mit Oberflächenbeschichtungen versehen werden, durch welche die Verschleißfestigkeit und sonstige Eigenschaften verbessert werden.

Wie aus Figur 3 hervorgeht, enthält die Trägerwelle 6 eine Vielzahl von über den Umfang des verbreiterten Aufnahmeteils 10 verteilt angeordneten Sammelschlitzen 14, die einen Innenraum zum Sammeln des gefilterten Materials bilden. Die Sammelschlitze 14 führen zu einem zentralen Sammelkanal 15, über den das gefilterte Material durch eine Radialöffnung 16 und einen nicht dargestellten Ringkanal im Gehäuse 1 nach Außen abgeführt werden kann.

In dem Gehäuse 1 ist ein in Axialrichtung über die gesamte Länge des rohrförmigen Filters 2 verlaufender und an dessen Außenseite anliegender Abstreifer 17 in Form einer Klinge, eines Schabemessers oder dgl. derart angeordnet, dass die am Filter 2 zurückgehaltenen Rückstände oder Verunreinigungen vom Filter 2 abgehoben und durch eine im Folgenden noch näher erläuterte Austragseinrichtung 18 in radialer Richtung abgeführt werden können. Der Abstreifer 17 ist schräg zur Außenfläche des Filters 2 und zu dessen Drehrichtung hin geneigt angeordnet. Der Abstreifer 17 kann in einer vorgegebenen Winkelstellung fest im Gehäuse 1 montiert sein, wie dies in den Figuren 1, 2 und 2 gezeigt ist. Der als Schabemesser oder Klinge ausgeführte Abstreifer 17 kann aber auch in einer schrägen Ausnehmung im Gehäuse 1 verschiebbar geführt und mittels einer Feder oder eines anderen Andruckelements an die Außenseite des Filters 2 angedrückt werden.

Die Austragseinrichtung 18 umfasst eine im Gehäuse 1 im Bereich des Abstreifers 17 drehbar angeordnete und durch einen Motor angetriebene Austragswelle 19, die parallel zur Trägerwelle 7 verläuft und im Bereich des Filters 2 eine durchgängige Öffnung 20 mit einem in dieser quer zur Drehachse 21 der Austragswelle 19 verschiebbar geführten Kolben 22 enthält. Bei der in den Figuren 1 bis 3 gezeigten Ausführung ist die Öffnung 20 als durchgehender Schlitz mit einem einzelnen Schieber als Kolben 22 ausgeführt.

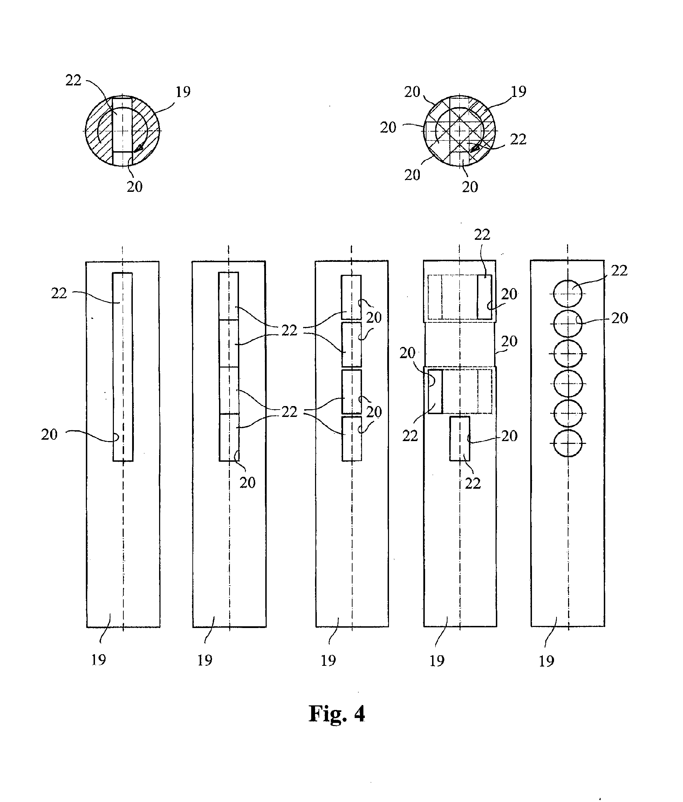

In Figur 4 sind verschiedene Ausführungsbeispiele für die Ausgestaltung der Austragswelle 19 gezeigt. In der linken Darstellung ist die Austragswelle 19 mit einer durchgängigen schlitzförmigen Öffnung 20 und einem einzelnen Schieber als Kolben 22 gemäß Figuren 1 bis 3 gezeigt. Daneben ist eine Austragswelle 19 mit einer durchgängigen schlitzförmigen Öffnung 20 und mehreren getrennten schieberförmigen Kolben 22 gezeigt. In der mittleren Darstellung ist eine Austragswelle 19 mit mehreren getrennten rechteckigen Öffnungen 20 und mehreren in den jeweiligen Öffnungen 20 verschiebbar angeordneten schieberförmigen Kolben 22 gezeigt. Daneben ist ein weiteres Ausführungsbeispiel der Austragswelle 19 mit mehreren in Axialrichtung und in Umfangsrichtung winkelversetzten schlitzförmigen Öffnungen 20 gezeigt. Beim gezeigten Ausführungsbeispiel sind vier in Axialrichtung versetzte Öffnungen 20 vorgehen, die gegeneinander um jeweils 45 ° versetzt sind. In der rechten Darstellung von Figur 4 ist eine Ausführungsform mit mehren in Axialrichtung aufeinander folgenden kreisrunden Öffnungen 20 und entsprechenden runden Kolben 22 gezeigt.

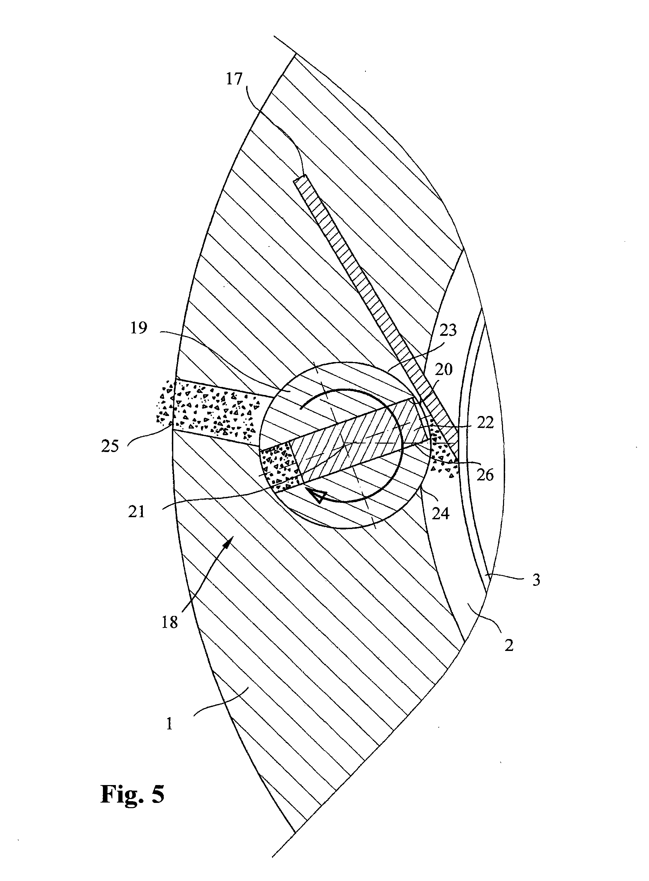

Die Austragswelle 19 ist gemäß Figur 2 in einer zum Filterraum 2 offenen Längsbohrung 23 des Gehäuses 1 derart angeordnet, dass ein Teil der Austragswelle 19 durch eine zum Filterraum 2 hin offene Ausnehmung 24 ragt. Auf der zur Ausnehmung 24 gegenüberliegenden Seite des Gehäuses 1 ist eine schlitzförmige Austrittsöffnung 25 für den Austrag der durch das Filter 2 zurückgehaltenen und von der und durch die Austragseinrichtung 18 abtransportierten Verunreinigungen vorgesehen. Wie besonders aus Figur 5 hervorgeht, weist der Kolben 22 in Verschieberichtung gesehen eine geringere Breite als der Durchmesser der Austragswelle 19 auf. Der Kolben 22 kann somit innerhalb der durchgehenden Öffnung 20 radial verschoben werden. Die Austrittsöffnung 25 im Gehäuse 1 ist unter einem Winkel versetzt zu einer Mittelachse 26 der zum Filterraum 2 hin offenen Ausnehmung 24 so angeordnet, dass sich die durchgehende Öffnung 20 bei der Drehung der Austragswelle 19 zur Austrittsöffnung 25 hin erst dann öffnet, wenn die Öffnung 20 an der zum Filterraum 2 hin offenen Ausnehmung 24 bereits vollständig offen ist.

Die Trägerwelle 7 und die Austragswelle 19 können durch unterschiedliche Antriebe geregelt angetrieben werden. Durch eine entsprechende Elektronik können so z.B. die Drehzahlen der Trägerwelle 7 und der Austragswelle in Abhängigkeit vom Einsatzzweck oder den bestehenden Drücken geregelt werden.

Bei der vorstehend beschriebenen Vorrichtung wird das verunreinigte Materialgemisch (vorwiegend plastische Kunststoffmasse) über die Zuführöffnung 6 des Gehäuses 1 unter Druck in den Filterraum 2 gedrückt und gelangt in den zwischen der Außenseite des Filters 3 und dem Gehäuse 1 gebildeten Ringraum. Die im Materialgemisch befindlichen Verunreinigungen werden durch das Filter 3 zurückgehalten, während das gefilterte Material durch die entsprechenden Durchgangsöffnungen im Filter 3 über die Sammelschlitze 14 zu dem Sammelkanal 15 gelangt und über die Radialöffnung 16 nach Außen abgeführt werden kann. Die am Filter 3 zurückgehaltenen Rückstände werden durch den Abstreifer 23 bei der Drehung des Filters 3 abgehoben und zwischen dem Abstreifer 17, dem Gehäuse 2 und der Austragswelle 19 gesammelt. Da der Kolben 22 eine geringere Länge als der Durchmesser der Austragswelle 19 aufweist und innerhalb der Öffnung 20 der Austragswelle 19 verschiebbar ist, kann er eine Aufnahmekammer für die Verunreinigungen bilden. Wenn die Öffnung 20 bei einer Drehung der Austragswelle 19 auf der einen Seite gemäß Figur 2 zu der zum Ringraum 2 offenen Ausnehmung 24 im Gehäuse 1 gelangt, wird der Kolben 22 durch den Innendruck im Filterraum 2 radial nach außen gedrückt und die vor dem Abstreifer 17 liegenden Verunreinigungen werden in die sich dadurch bildende Aufnahmekammer gepresst. Gleichzeitig werden die auf der gegenüberliegenden Seite der Öffnung 20 angesammelten Verunreinigungen durch die Bewegung des Kolbens 22 über die schlitzförmige Austrittsöffnung 25 des Gehäuse 1 ins Freie transportiert. Dadurch kann ein einfacher und dennoch effektiver Abtransport der vom Filter 2 zurückgehaltenen Verunreinigungen gewährleistet werden.

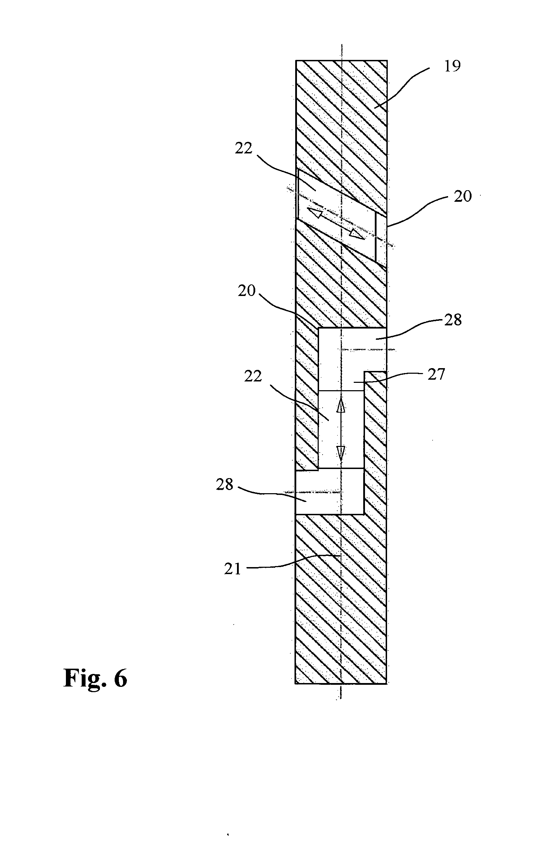

In Figur 6 sind weitere Möglichkeiten für die Anordnung des Kolbens 22 innerhalb der um eine Drehachse 21 drehbaren Austragswelle 19 gezeigt. Bei der im oberen Teil der Figur 6 gezeigten Ausführung ist die quer durch die Austragswelle 19 verlaufende Öffnung 20 nicht unter einem rechten Winkel, sondern schräg zur Drehachse 21 der Austragswelle angeordnet. Auch der Kolben 22 ist daher innerhalb der Öffnung 20 schräg zur Drehachse 21 der Austragswelle 19 verschiebbar. Bei der im unteren Teil der Figur 6 gezeigten Ausführung weist die durchgängige Öffnung 20 einen abgewinkelten Verlauf mit einem sich in Längsrichtung erstreckenden inneren Bereich 27 und zwei senkrecht zur Drehachse 21 der Drehachse radial nach außen verlaufenden äußeren Bereichen 28 auf. Die beiden radial nach außen verlaufenden Bereiche 28 sind in Längsrichtung der Drehachse zueinander versetzt und der Kolben 22 ist in Längsrichtung der Austragswelle 19 verschiebbar im inneren Bereich 27 angeordnet.

Der innerhalb der Austragswelle 19 verschiebbare und in seinem Hub begrenzte Kolben 22 wird wechselseitig mit Druck beaufschlagt und mit der ganzen Kolbenfläche oder über Anströmkanäle mit dem Druckraum des Filters und mit einer Austrittsöffnung über eine geometrisch definierte Steuerkante derart verbunden, dass der Kolben 22 einen Reinigungshub durchführt indem durch Überdruck im Filterraum der unter dem Abstreifer liegende Schmutz gleichzeitig in den entstehenden Kolbenraum gepresst und der auf der Abströmseite befindliche Schmutz in die Austrittsöffnung gedrückt wird, ohne dass eine direkte Verbindung zwischen Filterinnenraum und Filteraußenraum hergestellt wird. Der Kolben 22 kann seinen Entleerungshub durchführen, wenn die druckseitige Eintrittsöffnung den optimalem Abreinigungspunkt erreicht.

Die Erfindung ist nicht auf die vorstehend beschriebenen Ausführungsbeispiele beschränkt. So kann eine Filterung z.B. auch mit einer von innen nach außen gerichteten Strömungsrichtung erfolgen. Außerdem kann das Filter auch scheibenförmig ausgebildet sein oder kann eine andere geeignete Form aufweisen.

## Patentansprüche

1. Vorrichtung zum kontinuierlichen Filtern von Materialgemischen, insbesondere zur Abtrennung von Verunreinigungen aus Kunststoffschmelzen, mit einem in einem Filterraum (2) eines Gehäuses (1) drehbar angeordneten Filter (3), mindestens einem Abstreifer (17) zum Abheben der vom Filter (3) zurückgehaltenen Verunreinigungen und einer Austragseinrichtung (18) zum Abtransport der durch den Abstreifer (17) vom Filter (2) abgehobenen Verunreinigungen aus dem Gehäuse (1), **dadurch gekennzeichnet, dass** die Austragseinrichtung (18) eine im Gehäuse (1) drehbar angeordnete Austragswelle (19) enthält, die mindestens eine durchgehende Öffnung (20) mit mindestens einem in dieser Öffnung (20) verschiebbar geführten Kolben (22) aufweist.

2. Vorrichtung nach Anspruch 1, **dadurch gekennzeichnet, dass** der Kolben (22) in der Öffnung (20) quer zur Drehachse (21) der Austragswelle (19) verschiebbar geführt ist.

3. Vorrichtung nach Anspruch 1, **dadurch gekennzeichnet, dass** der Kolben (22) in der Öffnung (20) in Richtung der Drehachse (21) der Austragswelle (19) verschiebbar geführt ist.

4. Vorrichtung nach einem der Ansprüche 1 bis 3,
**dadurch gekennzeichnet, dass** die Öffnung (20) als durchgehender Schlitz ausgebildet ist, in dem ein einzelner schieberförmiger Kolben (22) angeordnet ist.

5. Vorrichtung nach einem der Ansprüche 1 bis 3, **dadurch gekennzeichnet, dass** die Öffnung (20) als durchgehender Schlitz ausgebildet ist, in dem mehrere schieberförmige Kolben (22) angeordnet sind.

6. Vorrichtung nach einem der Ansprüche 1 bis 3, **dadurch gekennzeichnet, dass** in der Austragswelle (19) mehrere voneinander getrennte schlitzförmige Öffnungen (22) mit jeweils einem darin angeordneten schieberförmigen Kolben (22) vorgesehen sind.

7. Vorrichtung nach einem der Ansprüche 1 bis 3, **dadurch gekennzeichnet, dass** in der Austragswelle (19) mehrere voneinander getrennte kreisrunde Öffnungen (22) mit jeweils einem darin angeordneten runden Kolben (22) vorgesehen sind.

8. Vorrichtung nach Anspruch 6 oder 7, **dadurch gekennzeichnet, dass** die Öffnungen (22) gleich ausgerichtet oder in Umfangsrichtung winkelversetzt sind.

9. Vorrichtung nach einem der Ansprüche 1 bis 8, **dadurch gekennzeichnet, dass** die Austragswelle (19) in einer zum Filterraum (2) offenen Längsbohrung (23) des Gehäuses (1) derart angeordnet ist, dass ein Teil der Austragswelle (19) durch eine zum Filterraum (2) offene Ausnehmung (24) des Gehäuses (1) ragt.

10. Vorrichtung nach Anspruch 9, **dadurch gekennzeichnet, dass** auf der zur Ausnehmung (24) gegenüberliegenden Seite des Gehäuses (1) eine Austrittsöffnung (25) für den Austrag der durch die Austragseinrichtung (18) abtransportierten Verunreinigungen vorgesehen ist.

11. Vorrichtung nach Anspruch 10, **dadurch gekennzeichnet, dass** die Austrittsöffnung (25) unter einem Winkel versetzt zu einer Mittelachse (26) der zum Filterraum (2) hin offenen Ausnehmung (24) so angeordnet ist, dass sich die durchgehende Öffnung (20) bei der Drehung der Austragswelle (19) zur Austrittsöffnung (25) hin erst dann öffnet, wenn die Öffnung (20) an der zum Filterraum (2) hin offenen Ausnehmung (24) bereits vollständig offen ist.

12. Vorrichtung nach einem der Ansprüche 1 bis 11,
**dadurch gekennzeichnet, dass** der Kolben (22) eine in Verschieberichtung gesehen geringere Breite als der Durchmesser der Austragswelle (19) aufweist.

13. Vorrichtung nach einem der der Ansprüche 1 bis 12, **dadurch gekennzeichnet, dass** die Trägerwelle (7) einen in einer Bohrung (8) des Gehäuses (1) drehbar gelagerten Antriebzapfen (9), einen im Filterraum (2) angeordneten Aufnahmeteil (10) für das Filter (3) und einen in einer Bohrung (11) eines Lagerdeckels (12) gelagerten Lagerzapfen (13) enthält.

14. Vorrichtung nach einem der Ansprüche 1 bis 13,
**dadurch gekennzeichnet, dass** die Trägerwelle (7) mehrere Sammelschlitze (14) für die Aufnahme des gefilterten Materials enthält, wobei die Sammelschlitze (14) zu einem zentralen Sammelkanal (15) führen, über den das gefilterte Material durch eine Radialöffnung (16) abgeführt wird.

15. Vorrichtung nach einem der Ansprüche 1 bis 14, **dadurch gekennzeichnet, dass** die Drehzahl der Trägerwelle (7) mit dem darauf angeordneten Filter (3) und die Drehzahl der Austragswelle (19) getrennt steuerbar sind.

## Claims

1. Apparatus for the continuous filtering of material mixes, in particular for the separation of impurities from plastic melts, with a filter (3) arranged rotatably in a filter space (2) of a housing (1), with at least one stripper (17) for lifting off the impurities retained by the filter (3) and with a discharge device (18) for transporting the impurities lifted off from the filter (2) by the stripper (17) away from the housing (1), **characterized in that** the discharge device (18) contains a discharge shaft (19) which is arranged rotatably in the housing (1) and which has at least one continuous orifice (20) with at least one piston (22) guided displaceably in this orifice (20).

2. Apparatus according to Claim 1, **characterized in that** the piston (22) is guided displaceably in the orifice (20) transversally to the axis of rotation (21) of the discharge shaft (19).

3. Apparatus according to Claim 1, **characterized in that** the piston (22) is guided displaceably in the orifice (20) in the direction of the axis of rotation (21) of the discharge shaft (19).

4. Apparatus according to one of Claims 1 to 3, **characterized in that** the orifice (20) is formed as a continuous slot in which a single slide-shaped piston (22) is arranged.

5. Apparatus according to one of Claims 1 to 3, **characterized in that** the orifice (20) is formed as a continuous slot in which a plurality of slide-shaped pistons (22) are arranged.

6. Apparatus according to one of Claims 1 to 3, **characterized in that** a plurality of slot-shaped orifices (22) separated from one another and each having a slide-shaped piston (22) arranged therein are provided in the discharge shaft (19).

7. Apparatus according to one of Claims 1 to 3, **characterized in that** a plurality of circular orifices (22) separated from one another and each having a round piston (22) arranged therein are provided in the discharge shaft (19).

8. Apparatus according to Claim 6 or 7, **characterized in that** the orifices (22) are oriented identically or are offset angularly in the circumferential direction.

9. Apparatus according to one of Claims 1 to 8, **characterized in that** the discharge shaft (19) is arranged in a longitudinal bore (23), open to the filter space (2), of the housing (1), in such a way that part of the discharge shaft (19) projects through a recess (24), open to the filter space (2), of the housing (1).

10. Apparatus according to Claim 9, **characterized in that** an outlet orifice (25) for the discharge of the impurities transported away by the discharge device (18) is provided on that side of the housing (1) which lies opposite the recess (24).

11. Apparatus according to Claim 10, **characterized in that** the outlet orifice (25) is arranged, offset at an angle to a mid-axis (26) of the recess (24) open to the filter space (2), such that, during the rotation of the discharge shaft (19), the continuous orifice (20) opens to the outlet orifice (25) only when the orifice (20) is already completely open at the recess (24) open to the filter space (2).

12. Apparatus according to one of Claims 1 to 11, **characterized in that** the piston (22) has a smaller width, as seen in the direction of displacement, than the diameter of the discharge shaft (19).

13. Apparatus according to one of Claims 1 to 12, **characterized in that** the carrier shaft (7) contains a drive journal (9) mounted rotatably in a bore (8) of the housing (1), a reception part (10), arranged in the filter space (2), for the filter (3), and a bearing journal (13) mounted in a bore (11) of a bearing cover (12).

14. Apparatus according to one of Claims 1 to 13, **characterized in that** the carrier shaft (7) contains a plurality of collecting slots (14) for the reception of the filtered material, the collecting slots (14) leading to a central collecting duct (15), via which the filtered material is carried away through a radial orifice (16).

15. Apparatus according to one of Claims 1 to 14, **characterized in that** the rotational speed of the carrier shaft (7) having the filter (3) arranged on it and the rotational speed of the discharge shaft (19) can be controlled separately.

## Revendications

1. Dispositif pour la filtration continue de mélanges de matière, en particulier pour la séparation d'impuretés de matières plastiques en fusion, comprenant un filtre (3) disposé à rotation dans un espace de filtre (2) d'un boîtier (1), au moins une racle (17) pour enlever les impuretés retenues par le filtre (3) et un dispositif d'évacuation (18) pour évacuer hors du boîtier (1) les impuretés enlevées du filtre (2) par la racle (17), **caractérisé en ce que** le dispositif d'évacuation (18) contient un arbre d'évacuation (19) disposé à rotation dans le boîtier (1), lequel présente au moins une ouverture traversante (20) avec au moins un piston (22) guidé de manière à pouvoir coulisser dans cette ouverture (20).

2. Dispositif selon la revendication 1, **caractérisé en ce que** le piston (22) est guidé de manière à pouvoir être déplacé dans l'ouverture (20) transversalement à l'axe de rotation (21) de l'arbre d'évacuation (19).

3. Dispositif selon la revendication 1, **caractérisé en ce que** le piston (22) est guidé de manière déplaçable dans l'ouverture (20) dans la direction de l'axe de rotation (21) de l'arbre d'évacuation (19).

4. Dispositif selon l'une quelconque des revendications 1 à 3, **caractérisé en ce que** l'ouverture (20) est réalisée sous forme de fente continue dans laquelle est disposé un piston individuel (22) en forme de coulisseau.

5. Dispositif selon l'une quelconque des revendications 1 à 3, **caractérisé en ce que** l'ouverture (20) est réalisée sous forme de fente continue dans laquelle sont disposés plusieurs pistons (22) en forme de coulisseau.

6. Dispositif selon l'une quelconque des revendications 1 à 3, **caractérisé en ce que** plusieurs ouvertures (22) en forme de fentes séparées les unes des autres sont prévues dans l'arbre d'évacuation (19) avec à chaque fois un piston (22) en forme de coulisseau disposé à l'intérieur de celles-ci.

7. Dispositif selon l'une quelconque des revendications 1 à 3, **caractérisé en ce que** dans l'arbre d'évacuation (19) sont prévues plusieurs ouvertures rondes circulaires (22) séparées les unes des autres avec à chaque fois un piston rond (22) disposé à l'intérieur de celles-ci.

8. Dispositif selon la revendication 6 ou 7, **caractérisé en ce que** les ouvertures (22) sont orientées de manière identique ou sont décalées angulairement dans la direction périphérique.

9. Dispositif selon l'une quelconque des revendications 1 à 8, **caractérisé en ce que** l'arbre d'évacuation (19) est disposé dans un alésage longitudinal (23) du boîtier (1) ouvert vers l'espace de filtre (2) de telle sorte qu'une partie de l'arbre d'évacuation (19) fasse saillie à travers un évidement (24) du boîtier (1) ouvert vers l'espace de filtre (2).

10. Dispositif selon la revendication 9, **caractérisé en ce que** sur le côté du boîtier (1) opposé à l'évidement (24) est prévue une ouverture de sortie (25) pour l'évacuation des impuretés transportées par le dispositif d'évacuation (18).

11. Dispositif selon la revendication 10, **caractérisé en ce que** l'ouverture de sortie (25) est disposée de manière décalée suivant un certain angle par rapport à un axe médian (26) de l'évidement (24) ouvert vers l'espace de filtre (2) de telle sorte que l'ouverture traversante (20), lors de la rotation de l'arbre d'évacuation (19), ne s'ouvre vers l'ouverture d'évacuation (25) que lorsque l'ouverture (20) est déjà complètement ouverte au niveau de l'évidement (24) ouvert vers l'espace de filtre (2).

12. Dispositif selon l'une quelconque des revendications 1 à 11, **caractérisé en ce que** le piston (22) présente une plus petite largeur, vue dans la direction de coulissement, que le diamètre de l'arbre d'évacuation (19).

13. Dispositif selon l'une quelconque des revendications 1 à 12, **caractérisé en ce que** l'arbre de support (7) contient un tourillon d'entraînement (9) monté à rotation dans un alésage (8) du boîtier (1), une partie de réception (10) pour le filtre (3) disposée dans l'espace de filtre (2) et un tourillon de palier (13) monté dans un alésage (11) d'un couvercle de palier (12).

14. Dispositif selon l'une quelconque des revendications 1 à 13, **caractérisé en ce que** l'arbre de support (7) contient plusieurs fentes de collecte (14) pour recevoir la matière filtrée, les fentes de collecte (14) conduisant à un canal de collecte central (15) par le biais duquel la matière filtrée est évacuée par une ouverture radiale (16).

15. Dispositif selon l'une quelconque des revendications 1 à 14, **caractérisé en ce que** la vitesse de rotation de l'arbre de support (17) avec le filtre (3) disposé sur celui-ci et la vitesse de rotation de l'arbre d'évacuation (19) peuvent être commandées séparément.
